# EUROPEAN PATENT APPLICATION

(11) **EP 4 578 298 A1**
(43) Date of publication of application: **02.07.2025**
(21) Application number: 23857342.2
(22) Date of filing: 22.08.2023
(51) Int. Cl.: A23L 27/00, A23L 2/60

(54) **NOVEL COMBINATION OF STEVIOL GLYCOSIDES**

(30) Priority: 23.08.2022 JP 2022132608
(71) Applicant: Morita Kagaku Kogyo Co., Ltd., Osaka 577-0002 (JP)
(72) Inventor: FUJITA, Isao, Osaka-shi, Osaka 577-0002 (JP); TANAKA, Tomihisa, Osaka-shi, Osaka 577-0002 (JP); NAKAJIMA, Yutaka, Osaka-shi, Osaka 577-0002 (JP)
(74) Representative: Uexküll & Stolberg
(86) International application number: PCT/JP2023/030161
(87) International publication number: WO 2024/043233

(57) **Abstract**

The present disclosure provides a combination of steviol glycosides having the feature of various taste qualities. According to an aspect, the present disclosure provides a rebaudioside composition containing at least one among rebaudioside A, rebaudioside D, and rebaudioside **M.** According to an embodiment, the present disclosure provides a rebaudioside composition containing rebaudioside A, rebaudioside D, and rebaudioside **M.** The content of the rebaudioside A, the rebaudioside D, and/or the rebaudioside M in the rebaudioside composition according to the present disclosure may be about 5%, about 10%, about 15%, about 20%, about 25%, about 30%, about 35%, about 40%, about 45%, about 50%, about 55%, about 60%, about 65%, about 70%, about 75%, about 80%, about 85%, about 90%, about 95%, or the like.

## Description

### TECHNICAL FIELD

The present disclosure relates to a rebaudioside composition comprising a steviol glycoside, and a food product comprising the same.

### BACKGROUND ART

Stevia is an asteraceous perennial plant originated from Paraguay in South America, and its scientific name is Stevia Rebaudiana Bertoni. Stevia contains, as a main component, stevioside having 300 times the sweetness of sugar, and contains sweetening components such as rebaudioside A, rebaudioside C, rebaudioside D, rebaudioside E, and dulcoside A. These sweetening components are used as natural sweeteners.

Stevioside, which is a main component of stevia, has been known for a long time and has been used as a sweetener. However, when stevioside is used as a sweetener, an unpleasant taste such as bitterness remains as an aftertaste, and thus its use has been limited. On the other hand, rebaudioside A contained in stevia as a minor sweetening component has a good quality of sweetness with less bitterness than stevioside and a degree of sweetness of 1.3 to 1.5 times that of stevioside. Thus, a stevia sweetener containing more rebaudioside A than stevioside has been desired. The inventors of the present invention have repeated selective breeding from conventional varieties to improve the varieties, developed a stevia variety (Stevia Rebaudiana Bertoni Morita) containing rebaudioside A as a main component and stevioside as a minor component, and developed a rebaudioside sweetener from this stevia variety (Patent Document 1).

### PRIOR ART DOCUMENTS

### PATENT DOCUMENTS

Patent Document 1: JP-A-2001-120218

### SUMMARY OF THE INVENTION

### PROBLEMS TO BE SOLVED BY THE INVENTION

Steviol glycosides include rebaudioside A, rebaudioside D, rebaudioside M, and the like, and the characteristics of the taste quality may vary depending on the ratio of these combinations. Since preferred taste quality may vary depending on the food products and conditions such as use conditions, it is desirable to provide combinations of steviol glycosides having various characteristics of taste quality.

### SOLUTIONS TO THE PROBLEMS

To solve the above problem, the inventors of the present invention have extensively conducted studies and resultantly found that a certain combination of several types of steviol glycosides is excellent in a certain taste quality. The inventors of the present invention have found that a rebaudioside composition comprising a certain combination of these steviol glycosides can be utilized as an additive for a food product or the like, and have completed the present invention.

The present disclosure provides a rebaudioside composition comprising at least one of rebaudioside A, rebaudioside D, and rebaudioside M, a sweetener or a food product comprising the same, and a method for producing the same.

For example, the present disclosure provides:
(Item 1)
   A rebaudioside composition comprising rebaudioside A, rebaudioside D, and rebaudioside M.
(Item 2)
   The rebaudioside composition according to any one of the preceding items, comprising the rebaudioside A in an amount of less than about 65 wt%.
(Item 3)
   The rebaudioside composition according to any one of the preceding items, comprising the rebaudioside A in an amount of about 35 to 65 wt%.
(Item 4)
   The rebaudioside composition according to any one of the preceding items, comprising the rebaudioside A in an amount of more than about 20 wt% and less than about 65 wt%.
(Item 5)
   The rebaudioside composition according to any one of the preceding items, wherein the rebaudioside D is present in an amount larger than an amount of the rebaudioside M.
(Item 6)
   The rebaudioside composition according to any one of the preceding items, wherein the rebaudioside M is present in an amount larger than an amount of the rebaudioside D.
(Item 7)
   The rebaudioside composition according to any one of the preceding items, comprising the rebaudioside D and the rebaudioside M in a ratio of about 1.5 : 1 to 5 : 1.
(Item 8)
   The rebaudioside composition according to any one of the preceding items, comprising the rebaudioside D and the rebaudioside M in a ratio of about 1.5 : 1 to 2.5 : 1.
(Item 9)
   The rebaudioside composition according to any one of the preceding items, comprising a total content of the rebaudioside D and the rebaudioside M of about 5 to 65 wt%.
(Item 10)
   The rebaudioside composition according to any one of the preceding items, comprising a total content of the rebaudioside D and the rebaudioside M of about 5 to 40 wt%.
(Item 11)
   The rebaudioside composition according to any one of the preceding items, comprising the rebaudioside A in an amount of about 95 wt% or more.
(Item 12)
   The rebaudioside composition according to any one of the preceding items, further comprising rebaudioside O, for example, rebaudioside O in an amount of about 1 to 10 wt%.
(Item 13)
   The rebaudioside composition according to any one of the preceding items, further comprising rebaudioside N, for example, rebaudioside N in an amount of about 1 to 10 wt%.
(Item 14)
   A composition comprising the rebaudioside composition according to any one of the preceding items and an additional component selected from the group consisting of acidulants, sweeteners, salts, seasonings, flavorings, coloring agents, minerals, vitamins, antioxidants, preservatives, foaming agents, auxiliary foaming agents, alcohols, binders, extenders, thickeners, surfactants, anti-solidification agents, fruit juice, and vegetable juice.
(Item 15)
   The rebaudioside composition according to any one of the preceding items or the composition according to any one of the preceding items for adding to a food product.
(Item 16)
   A food product comprising the rebaudioside composition according to any one of the preceding items or the composition according to any one of the preceding items.
(Item 17)
   The rebaudioside composition or the composition according to any one of the preceding items or the food product according to any one of the preceding items, wherein the food product is selected from the group consisting of sports beverages, non-carbonated beverages, carbonated beverages, ginger ales, root beers, ciders, fruit-flavored soft drinks (for example, citrus flavored soft drinks, such as lemon lime flavored soft drinks and orange flavored soft drinks), powdered soft drinks, fruit juice derived from fruits and/or vegetables, fruit beverages, fruit juice beverages, fruit-flavored beverages, vegetable juice, mixed juice, energy drinks, coffee, cocoa, black tea, green tea, oolong tea, milk beverages, cafe au lait, milk tea, fruit milk beverages, yogurt drinks, lactic acid bacteria beverages, dairy products, bakery products, yogurt, jelly, jelly drinks, puddings, bavarian cream, blancmange, cakes, brownies, mousse, frozen foods, ice creams, ice milks, lactose ice creams, sherbet, confectioneries, rice cakes, snacks, candies, soft candies, sauces, edible gels, creams, pasta, jam, corn products, spices, grilled meat, tomato ketchups, processed agricultural products, processed livestock products, processed marine products, processed meat products, boil-in-the-bag meals, pickles, preserved foods, cereal products, frozen confectioneries, instant noodles, jams, chewing gums, Japanese confectioneries, health food products, chocolates, tabletop sweeteners, baked confectioneries, delicacies, water-kneaded food, yoghurt, liqueur, wine, sherbet, cereal foods, plant fiber-containing foods, dried fruits, sauces, soy sauce, miso pastes, vinegars, dressings, mayonnaise, ketchups, curry, soup, rice confectioneries, cubic rice crackers, breads, biscuits, crackers, pancake mixes, canned fruits, canned vegetables, vegetable juice, meat products, fish meat paste products, marine products, salty foods, pickled vegetables, complex seasonings, alcoholic beverages, seasonings, vinegar beverages, concentrated beverages, supplements, functional foods, protein foods, and palatable foods.
(Item 18)
   The rebaudioside composition, the composition, or the food product according to any one of the preceding items, wherein the food product is selected from the group consisting of lactic acid bacteria beverages, fruit juice beverages, coffee, cupcakes, pastries, protein beverages, protein bars, chocolates, and sports drinks.
(Item 19)
   A method of manufacturing a food product, the method comprising adding the rebaudioside composition or the composition according to any one of the preceding items to a food product.

In the present disclosure, it is intended that one or a plurality of the features described above may be provided in further combination in addition to the specified combination. Still further embodiments and advantages of the present disclosure will be appreciated by the skilled person upon reading and understanding the following detailed description as appropriate.

### ADVANTAGES OF THE INVENTION

The present disclosure provides a rebaudioside composition excellent in a certain taste quality, which can impart high additional value to a food product or the like.

### BRIEF DESCRIPTION OF THE DRAWINGS

Fig. 1 is a schematic view illustrating the taste curve of each sweetener. R represents rebaudioside, ADM represents a mixture of rebaudiosides A, D, and M, and ST represents stevioside. The vertical axis represents a position where sweetness is strongly felt, and the horizontal axis represents a time (seconds) during which sweetness is felt after ingestion.

### MODE FOR CARRYING OUT THE INVENTION

Hereinafter, the present disclosure will be described while showing the best mode. It is to be understood that throughout the specification, the singular forms of expression also include the concept of the plural forms thereof, unless otherwise stated. Thus, it is to be understood that a singular article (for example, in English, "a", "an", "the", or the like) also includes the plural concept thereof unless otherwise stated. It is also to be understood that the terms used in the specification are used in the sense commonly used in the art unless otherwise stated. Thus, unless otherwise defined, all technical and scientific terms used in the specification have the same meanings as commonly understood by the skilled person to which the present disclosure belongs. When a contradiction arises, the present specification (comprising definitions) shall prevail.

Hereinafter, definitions and/or basic technical contents of terms particularly used in the present specification will be described as appropriate.

### (Definitions etc.)

In the present specification, "rebaudioside composition" refers to a composition comprising a combination of a plurality of types of steviol glycosides comprising at least one of rebaudioside A, rebaudioside D, and rebaudioside M. In some cases, the rebaudioside composition may refer to a composition consisting of steviol glycosides (for example, rebaudioside A, rebaudioside B, rebaudioside C, rebaudioside D, rebaudioside E, rebaudioside F, rebaudioside G, rebaudioside H, rebaudioside I, rebaudioside J, rebaudioside K, rebaudioside L, rebaudioside M, rebaudioside N, rebaudioside O, dulcoside A, rubusoside, steviol, steviolmonoside, steviolbioside, and stevioside), except for volatile components, such as a solvent (for example, water). In this case, the rebaudioside composition may be a purified steviol glycoside or a mixture thereof, and the presence of trace amounts of impurities contaminated during the purification process is not prevented.

The structure of a representative steviol glycoside is shown below.

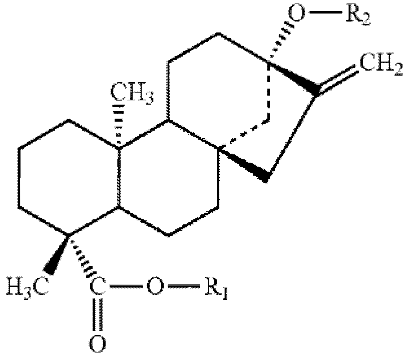

| Name | R₁ | R₂ |
|---|---|---|
| Steviol | H | H |
| Steviolmonoside | H | βGlc |
| Steviolbioside | H | βGlc-βGlc(2→1) |
| Stevioside | βGlc | βGlc-βGlc(2→1) |
| Rebaudioside A | βGlc | 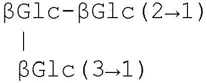 |
| Rebaudioside B | H | 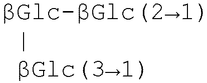 |
| Rebaudioside C | βGlc | 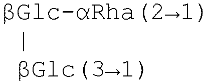 |
| Rebaudioside D | βGlc-βGlc(2→1) | 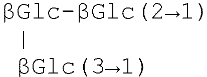 |
| Rebaudioside E | βGlc-βGlc(2→1) | βGlc-βGlc(2→1) |
| Rebaudioside F | βGlc | 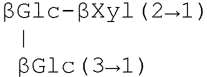 |
| Rebaudioside G | βGlc | βGlc-βGlc(3→1) |
| Rebaudioside H | βGlc | 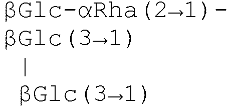 |
| Rebaudioside I | βGlc-βGlc(3→1) | 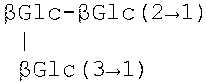 |
| Rebaudioside J | βGlc-αRha(2→1) | 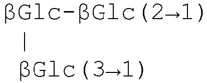 |
| Rebaudioside K | βGlc-βGlc(2→1) | 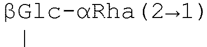 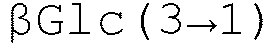 |
| Rebaudioside L | βGlc | 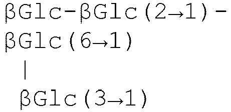 |
| Rebaudioside M | 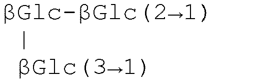 | 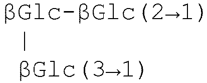 |
| Rebaudioside N | 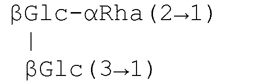 | 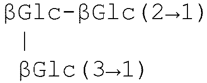 |
| Rebaudioside O | 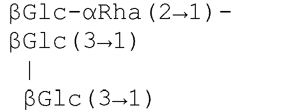 | 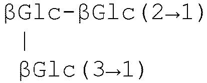 |
| Dulcoside A | βGlc | βGlc-αRha(2→1) |
| Rubusoside | βGlc | βGlc |

Any compound described in the present specification (for example, steviol glycosides) may be a purified compound. The purified compound may have a purity of, for example, 95% or more, 96% or more, 97% or more, 98% or more, 99% or more, or 99.5% or more by dry weight%. For example, when rebaudioside A is purified from a plant body of stevia by an ordinary purification method, a trace amount of stevioside or the like may be contaminated, but the influence of trace components may be negligible in carrying out the invention of the present disclosure.

In the present specification "rebaudioside component" refers to the entire rebaudioside compounds contained in the composition. The rebaudioside compounds may be rebaudioside A, rebaudioside B, rebaudioside C, rebaudioside D, rebaudioside E, rebaudioside F, rebaudioside G, rebaudioside H, rebaudioside I, rebaudioside J, rebaudioside K, rebaudioside L, rebaudioside M, rebaudioside N, and rebaudioside O.

In the present specification, "food product" refers to a product for a mammal to take orally. In the present specification, the food product includes a beverage, a dry product (for example, instant foods, powders for preparing beverages, and the like) for oral consumption after the addition of a liquid, a frozen food, and an uncooked product for oral consumption after heating.

In the present specification, "beverage" refers to a food product that can be orally taken without chewing. For example, the beverage includes a sports beverage, a jelly beverage, an alcoholic beverage, and a soft drink.

In the present specification, any compounds and components may be provided in the form of a salt unless otherwise specified. In particular, any compounds and components may be provided as the form of a salt formed with a base or an acid normally used in food products, for example, phosphoric acid, phosphorous acid, polyphosphoric acid, hydrochloric acid, sulfuric acid, carbonic acid, aldonic acid, uronic acid, aldanic acid, alginic acid, gluconic acid, glucuronic acid, glucanic acid, galactaric acid, galacturonic acid, benzoic acid, 2,4-dihydroxybenzoic acid, cinnamic acid, hydroxy acid, cyclohexylcarboxylic acid, tannic acid, lactic acid, tartaric acid, citric acid, gluconic acid, glucoheptonic acid, adipic acid, hydroxycitric acid, malic acid, fumaric acid, maleic acid, succinic acid, chlorogenic acid, salicylic acid, creatine, glucosamine hydrochloride, glucono-δ-lactone, caffeic acid, bile acid, acetic acid, ascorbic acid, alginic acid, erythorbic acid, polyglutamic acid, aspartic acid, arginine, glycine, glutamic acid, proline, threonine, theanine, cysteine, cystine, alanine, valine, tyrosine, leucine, isoleucine, asparagine, serine, lysine, histidine, ornithine, methionine, carnitine, aminobutyric acid, glutamine, hydroxyproline, taurine, norvaline, glutathione, sarcosine, poly-L-aspartic acid, sodium, potassium, magnesium, calcium, guanidine, glucosamine, poly-L-lysine, poly-L-ornithine, or poly-L-arginine.

In the present specification, the term "about" refers to the indicated value plus or minus 10%, unless otherwise defined. "About" as used for a temperature refers to the indicated value plus or minus 3°C. "About" as used for a ratio refers to a ratio of plus or minus 10% of the value (X) on the left of the indicated ratio (described as X : Y or the like).

In the present specification, when a proportion of a component is described, a proportion on a dry weight basis (%, ratio, or the like) is indicated unless otherwise specified.

### (Preferred Embodiment)

In one aspect, the present disclosure provides a certain taste quality with a combination of steviol glycosides comprising at least one of rebaudioside A, rebaudioside D, and rebaudioside M. It is contemplated that any means for achieving this are within the scope of the present disclosure. For example, even if not explicitly described, the description of a composition comprising a component contemplates embodiments reflecting other means, such as a method of using the same component, the use of the same component, and the same component for use in the method. Although the present disclosure is described in the present specification primarily in embodiments of compositions, the description of a composition for use comprising a component contemplates embodiments reflecting other means, such as a method of the same use of the same component, and the same use of the same component. For example, any disclosure relating to a food product comprising a rebaudioside composition is also a disclosure relating to a method of manufacturing a food product using the rebaudioside composition.

### (Rebaudioside Composition)

In one aspect, the present disclosure provides a rebaudioside composition comprising at least one of rebaudioside A, rebaudioside D, and rebaudioside M. In one embodiment, the present disclosure provides a rebaudioside composition comprising at least two of rebaudioside A, rebaudioside D, and rebaudioside M. In one embodiment, the present disclosure provides a rebaudioside composition comprising rebaudioside A, rebaudioside D, and rebaudioside M. In one embodiment, the rebaudioside composition of the present disclosure comprises one or more of rebaudioside B, rebaudioside C, rebaudioside E, rebaudioside F, rebaudioside G, rebaudioside H, rebaudioside I, rebaudioside J, rebaudioside K, rebaudioside L, rebaudioside N, rebaudioside O, rebaudioside Q, rebaudioside R, dulcoside A, dulcoside C, rubusoside, steviol, steviolmonoside, steviolbioside, and stevioside besides rebaudioside A, rebaudioside D, and rebaudioside **M.** In one embodiment, the rebaudioside composition of the present disclosure does not comprise one or more of rebaudioside B, rebaudioside C, rebaudioside E, rebaudioside F, rebaudioside G, rebaudioside H, rebaudioside I, rebaudioside J, rebaudioside K, rebaudioside L, rebaudioside N, rebaudioside O, rebaudioside Q, rebaudioside R, dulcoside A, dulcoside C, rubusoside, steviol, steviolmonoside, steviolbioside, and stevioside.

In one embodiment, the present disclosure provides a rebaudioside composition comprising rebaudioside A (which may further comprise rebaudioside D and/or rebaudioside M), wherein the content of rebaudioside A in the rebaudioside composition or the rebaudioside component may be about 20%, about 25%, about 30%, about 35%, about 40%, about 45%, about 50%, about 55%, about 60%, about 65%, about 70%, about 75%, about 80%, about 85%, about 90%, about 95%, about 96%, about 99%, or a range between any two of these values, for example, about 20 to 99%, about 25 to 99%, about 50 to 95%, about 60 to 95%, about 5 to 65%, about 20 to 65%, about 25 to 65%, or about 30 to 60%.

In one embodiment, the present disclosure provides a rebaudioside composition comprising rebaudioside D (which may further comprise rebaudioside A and/or rebaudioside M), wherein the content of rebaudioside D in the rebaudioside composition or the rebaudioside component may be about 1%, about 2%, about 5%, about 10%, about 15%, about 20%, about 25%, about 30%, about 35%, about 40%, about 45%, about 50%, about 55%, about 60%, about 65%, about 70%, or a range between any two of these values, for example, about 1 to 70%, about 5 to 50%, about 5 to 40%, about 5 to 30%, about 5 to 20%, about 5 to 10%, about 10 to 50%, about 10 to 40%, about 10 to 30%, about 10 to 20%, about 15 to 50%, about 15 to 40%, about 15 to 30%, about 20 to 50%, about 20 to 40%, or about 20 to 30%.

In one embodiment, the present disclosure provides a rebaudioside composition comprising rebaudioside M (which may further comprise rebaudioside A and/or rebaudioside D), wherein the content of rebaudioside M in the rebaudioside composition or the rebaudioside component may be about 1%, about 2%, about 5%, about 10%, about 15%, about 20%, about 25%, about 30%, about 35%, about 40%, about 45%, about 50%, about 55%, about 60%, about 65%, about 70%, or a range between any two of these values, for example, about 1 to 70%, about 5 to 50%, about 5 to 40%, about 5 to 30%, about 5 to 20%, about 5 to 10%, about 10 to 50%, about 10 to 40%, about 10 to 30%, about 10 to 20%, about 15 to 50%, about 15 to 40%, about 15 to 30%, about 20 to 50%, about 20 to 40%, or about 20 to 30%.

In one embodiment, the present disclosure provides a rebaudioside composition comprising rebaudioside A and rebaudioside D (which may further comprise rebaudioside M), wherein rebaudioside A : rebaudioside D may be contained in the ratio of about 1 : 2, about 1 : 1, about 2 : 1, about 3 : 1, about 4 : 1, about 5 : 1, about 7 : 1, about 8 : 1, about 9 : 1, about 10 : 1, about 15 : 1, about 20 : 1, about 30 : 1, about 40 : 1, about 50 : 1, about 100 : 1, or a range between any two of these values, for example, about 1 : 2 to 100 : 1, about 1 : 1 to 10 : 1, about 1 : 1 to 8 : 1, about 1 : 1 to 6 : 1, about 1 : 1 to 4 : 1, about 1 : 1 to 2 : 1, about 2 : 1 to 10 : 1, about 2 : 1 to 8 : 1, about 2 : 1 to 6 : 1, about 2 : 1 to 4 : 1, about 3 : 1 to 10 : 1, about 3 : 1 to 8 : 1, about 3 : 1 to 6 : 1, about 4 : 1 to 10 : 1, about 4 : 1 to 8 : 1, about 4 : 1 to 6 : 1, about 5 : 1 to 10 : 1, or about 5 : 1 to 8 : 1, and the total content of rebaudioside A and rebaudioside D in the rebaudioside composition or the rebaudioside component may be about 30%, about 35%, about 40%, about 45%, about 50%, about 55%, about 60%, about 65%, about 70%, about 75%, about 80%, about 85%, about 90%, about 95%, about 99%, or a range between any two of these values, for example, about 30 to 99%, about 50 to 95%, about 60 to 95%, about 5 to 65%, about 30 to 65%, or about 5 to 35%. Here, for each content of rebaudioside A and/or rebaudioside D, the description of the rebaudioside composition comprising rebaudioside A or rebaudioside D described above may be adopted.

In one embodiment, the present disclosure provides a rebaudioside composition comprising rebaudioside A and rebaudioside M (which may further comprise rebaudioside D), wherein rebaudioside A : rebaudioside M may be contained in the ratio of about 1 : 2, about 1 : 1, about 2 : 1, about 3 : 1, about 4 : 1, about 5 : 1, about 7 : 1, about 8 : 1, about 9 : 1, about 10 : 1, about 15 : 1, about 20 : 1, about 30 : 1, about 40 : 1, about 50 : 1, about 100 : 1, or a range between any two of these values, for example, about 1 : 2 to 100 : 1, about 1 : 1 to 10 : 1, about 1 : 1 to 8 : 1, about 1 : 1 to 6 : 1, about 1 : 1 to 4 : 1, about 1 : 1 to 2 : 1, about 2 : 1 to 10 : 1, about 2 : 1 to 8 : 1, about 2 : 1 to 6 : 1, about 2: 1 to 4 : 1, about 3 : 1 to 10 : 1, about 3 : 1 to 8 : 1, about 3 : 1 to 6 : 1, about 4 : 1 to 10 : 1, about 4 : 1 to 8 : 1, about 4 : 1 to 6 : 1, about 5 : 1 to 10 : 1, about 5 : 1 to 8 : 1, and the total content of rebaudioside A and rebaudioside M in the rebaudioside composition or the rebaudioside component may be about 30%, about 35%, about 40%, about 45%, about 50%, about 55%, about 60%, about 65%, about 70%, about 75%, about 80%, about 85%, about 90%, about 95%, about 99%, or a range between any two of these values, for example, about 30 to 99%, about 50 to 95%, about 60 to 95%, about 5 to 65%, about 30 to 65%, or about 5 to 35%. Here, for each content of rebaudioside A and/or rebaudioside M, the description of the rebaudioside composition comprising rebaudioside A or rebaudioside M described above may be adopted.

In one embodiment, the present disclosure provides a rebaudioside composition comprising rebaudioside D and rebaudioside M (which may further comprise rebaudioside A), wherein rebaudioside D : rebaudioside M may be contained in the ratio of about 1 : 5, about 1 : 4, about 1 : 3, about 1 : 2, about 1 : 1.5, about 1 : 1, about 1.5 : 1, about 2 : 1, about 2.5 : 1, about 3 : 1, about 4 : 1, about 5 : 1, about 7 : 1, about 8 : 1, about 9 : 1, about 10 : 1, or a range between any two of these values, for example, about 1 : 5 to 10 : 1, about 1 : 1 to 10 : 1, about 1 : 1 to 8 : 1, about 1 : 1 to 6 : 1, about 1 : 1 to 4 : 1, about 1 : 1 to 3 : 1, about 1 : 1 to 2 : 1, about 1.5 : 1 to 3 : 1, about 1.5 : 1 to 2.5 : 1, about 1.5 : 1 to 2 : 1, about 2 : 1 to 10 : 1, about 2 : 1 to 8 : 1, about 2 : 1 to 6 : 1, about 2 : 1 to 4 : 1, about 3 : 1 to 10 : 1, about 3 : 1 to 8 : 1, about 3 : 1 to 6 : 1, about 4 : 1 to 10 : 1, about 4 : 1 to 8 : 1, about 4 : 1 to 6 : 1, about 5 : 1 to 10 : 1, or about 5 : 1 to 8 : 1, and the total content of rebaudioside D and rebaudioside M in the rebaudioside composition or the rebaudioside component may be about 1%, about 2%, about 5%, about 10%, about 15%, about 20%, about 25%, about 30%, about 35%, about 40%, about 45%, about 50%, about 55%, about 60%, about 65%, about 70%, or a range between any two of these values, for example, about 1 to 70%, about 5 to 50%, about 5 to 40%, about 5 to 30%, about 5 to 20%, about 5 to 10%, about 10 to 70%, about 10 to 60%, about 10 to 50%, about 10 to 40%, about 10 to 30%, about 10 to 20%, about 15 to 70%, about 15 to 50%, about 15 to 30%, about 20 to 70%, about 20 to 50%, about 20 to 40%, about 30 to 70%, or about 30 to 50%. In one embodiment, the rebaudioside composition of the present disclosure comprises more rebaudioside D than rebaudioside M. In one embodiment, the rebaudioside composition of the present disclosure comprises more rebaudioside M than rebaudioside D. Here, for each content of rebaudioside D and/or rebaudioside M, the description of the rebaudioside composition comprising rebaudioside D or rebaudioside M described above may be adopted.

In one embodiment, the present disclosure provides a rebaudioside composition comprising rebaudioside A, rebaudioside D, and rebaudioside M, wherein rebaudioside A : (total of rebaudioside D + rebaudioside M) may be contained in the ratio of about 1 : 2, about 1 : 1.5, about 1 : 1, about 1.5 : 1, about 2 : 1, about 3 : 1, about 4 : 1, about 5 : 1, about 7 : 1, about 8 : 1, about 9 : 1, about 10 : 1, about 20 : 1, about 30 : 1, about 40 : 1, about 50 : 1, about 100 : 1, or a range between any two of these values, for example, about 1 : 2 to 100 : 1, about 1 : 1 to 10 : 1, about 1 : 1 to 8 : 1, about 1 : 1 to 6 : 1, about 1 : 1 to 4 : 1, about 1 : 1 to 2 : 1, about 2 : 1 to 10 : 1, about 2 : 1 to 8 : 1, about 2 : 1 to 6 : 1, about 2: 1 to 4 : 1, about 3 : 1 to 10 : 1, about 3 : 1 to 8 : 1, about 3 : 1 to 6 : 1, about 4 : 1 to 10 : 1, about 4 : 1 to 8 : 1, about 4 : 1 to 6 : 1, about 5 : 1 to 10 : 1, about 5 : 1 to 8 : 1, and the total content of rebaudioside A, rebaudioside D, and rebaudioside M in the rebaudioside composition or the rebaudioside component may be about 50%, about 55%, about 60%, about 65%, about 70%, about 75%, about 80%, about 85%, about 90%, about 95%, about 99%, or a range between any two of these values, for example, about 50 to 99%, about 60 to 99%, about 80 to 99%, about 50 to 90%, about 50 to 80%, about 50 to 70%, about 50 to 60%, about 60 to 90%, about 60 to 80%, about 60 to 70%, about 70 to 90%, about 70 to 80%, or about 80 to 90%. Here, for the proportion and the total content of rebaudioside A and rebaudioside D, the proportion and the total content of rebaudioside A : rebaudioside M, and/or the proportion and the total content of rebaudioside D : rebaudioside M, the description for the rebaudioside composition comprising rebaudioside A and rebaudioside D, the rebaudioside composition comprising rebaudioside A and rebaudioside M, and the rebaudioside composition comprising rebaudioside D and rebaudioside M described above may be adopted, and for the content of each of rebaudioside A, rebaudioside D, and/or rebaudioside M, the description for the rebaudioside composition comprising rebaudioside A, rebaudioside D, or rebaudioside M described above may be adopted.

In one preferred embodiment, the present disclosure provides a rebaudioside composition comprising rebaudioside A, rebaudioside D, and rebaudioside M, wherein the rebaudioside composition comprises about 65 wt% or less of rebaudioside A, for example more than about 20 wt% and less than 65 wt%, for example more than about 25 wt% and less than 65 wt%, for example about 30 to 60 wt%, of rebaudioside A and a total content of rebaudioside D and rebaudioside M of about 30 to 80 wt%, for example about 40 to 75 wt%, and wherein rebaudioside D and rebaudioside M are contained, for example, in the ratio of rebaudioside D and rebaudioside M of about 1 : 2 to 5 : 1 (for example, about 1 : 1 to 3 : 1, about 2 : 1). Such a rebaudioside composition can have an excellent balance of taste qualities (for example, rapid rising of sweetness, and low remaining bitterness and astringency), and may be suitably used, for example, in beverages and the like.

In another preferred embodiment, the present disclosure provides a rebaudioside composition comprising rebaudioside A, rebaudioside D, and rebaudioside M, wherein the rebaudioside composition comprises for rebaudioside A about 95 wt% of rebaudioside A and a total content of rebaudioside D and rebaudioside M of about 1 to 5 wt%, for example about 5 wt%, and rebaudioside D and rebaudioside M are contained, for example, in the ratio of rebaudioside D and rebaudioside M of about 1 : 2 to 5 : 1 (for example, about 1 : 1 to 3 : 1, about 2 : 1). Such a rebaudioside composition can have an excellent balance of taste qualities, and can be suitably used, for example, in beverages and the like.

In one embodiment, rebaudioside O (for example, about 1 to 10 wt% of rebaudioside O) and/or rebaudioside N (for example, about 1 to 10 wt% of rebaudioside N) may be further comprised, and about 1 to 10 wt% of rebaudioside O and/or about 1 to 10 wt% of rebaudioside N may be added to the above rebaudioside composition to prepare the rebaudioside composition.

In one embodiment, the rebaudioside composition of the present disclosure may further comprise additional components. In the present specification, a composition prepared by adding an additional component other than rebaudioside to a rebaudioside composition may be simply referred to as a composition. Examples of the additional component include an acidulant, a sweetener, a salt, a seasoning, a flavoring, a coloring agent, a mineral, a vitamin, an antioxidant, a preservative, a foaming agent, an auxiliary foaming agent, an alcohol (for example, ethanol), a binder, an extender, a thickener, a surfactant, an anti-solidification agent, fruit juice, and vegetable juice. Any suitable additive component that may be generally used in food products may be used in the composition of the present disclosure.

Examples of the acidulant include, but are not limited to, phosphoric acid, phosphorous acid, polyphosphoric acid, hydrochloric acid, sulfuric acid, carbonic acid, aldonic acid, uronic acid, aldanic acid, alginic acid, gluconic acid, glucuronic acid, glucanic acid, galactaric acid, galacturonic acid, benzoic acid, 2,4-dihydroxybenzoic acid, cinnamic acid, hydroxy acid, cyclohexylcarboxylic acid, tannic acid, lactic acid, tartaric acid, citric acid, gluconic acid, glucoheptonic acid, adipic acid, hydroxycitric acid, malic acid, fumaric acid, maleic acid, succinic acid, chlorogenic acid, salicylic acid, creatine, glucosamine hydrochloride, glucono-δ-lactone, caffeic acid, bile acid, acetic acid, ascorbic acid, alginic acid, erythorbic acid, and polyglutamic acid.

Examples of the sweetener include, but are not limited, to, palatinose, tagatose, trehalose, galactose, rhamnose, cyclodextrin, (for example, α-cyclodextrin, β-cyclodextrin, and γ-cyclodextrin), maltodextrin, dextran, sucrose, glucose, ribulose, fructose, threose, arabinose, xylose, lyxose, allose, altrose, mannose, idose, lactose, maltose, invert sugars, isotrehalose, neotrehalose, palatinose or isomaltulose, erythrose, deoxyribose, gulose, idose, talose, erythrulose, xylulose, psicose, turanose, cellobiose, amylopectin, glucosamine, mannosamine, fucose, glucuronic acid, gluconic acid, gluconolactone, abequose, galactosamine, beet oligosaccharide, isomaltooligosaccharide (isomaltose, isomaltotriose, panose, and the like), xylooligosaccharide (xylotriose, xylobiose, and the like), gentiooligosaccharide (gentiobiose, gentiotriose, gentiotetraose, and the like), sorbose, nigerooligosaccharide, palatinose oligosaccharide, fructooligosaccharide (kestose, nystose, and the like), maltotetraol, maltotriol, maltooligosaccharide (maltotriose, maltotetraose, maltopentaose, maltohexaose, maltoheptaose, and the like), lactulose, melibiose, raffinose, rhamnose, ribose, isomerized liquid sugars such as high fructose corn syrup/starch syrup, complex sugars, soybean oligosaccharide, glucose syrup, erythritol, maltitol, mannitol, sorbitol, lactitol, xylitol, inositol, isomalt, propylene glycol, glycerol (glycerin), threitol, galactitol, reduced isomaltooligosaccharide, reduced xylooligosaccharide, reduced gentiooligosaccharide, reduced maltose syrup, reduced glucose syrups, sugar alcohols, monatin, curculin, sucralose, saccharin, cyclamate, aspartame, acesulfame potassium or other salts, and neotame.

In one embodiment, examples of the salt include, but are not limited to, a salt formed by any combination of an acid component (phosphoric acid, phosphorous acid, polyphosphoric acid, hydrochloric acid, sulfuric acid, carbonic acid, aldonic acid, uronic acid, aldanic acid, alginic acid, gluconic acid, glucuronic acid, glucanic acid, galactaric acid, galacturonic acid, benzoic acid, 2,4-dihydroxybenzoic acid, cinnamic acid, hydroxy acid, cyclohexylcarboxylic acid, tannic acid, lactic acid, tartaric acid, citric acid, gluconic acid, glucoheptonic acid, adipic acid, hydroxycitric acid, malic acid, fumaric acid, maleic acid, succinic acid, chlorogenic acid, salicylic acid, creatine, glucosamine hydrochloride, glucono-δ-lactone, caffeic acid, bile acid, acetic acid, ascorbic acid, alginic acid, erythorbic acid, polyglutamic acid, aspartic acid, arginine, glycine, glutamic acid, proline, threonine, theanine, cysteine, cystine, alanine, valine, tyrosine, leucine, isoleucine, asparagine, serine, lysine, histidine, ornithine, methionine, carnitine, aminobutyric acid, glutamine, hydroxyproline, taurine, norvaline, glutathione, sarcosine, poly-L-aspartic acid, and the like) and a base component (sodium, potassium, magnesium, calcium, guanidine, glucosamine, aspartic acid, arginine, glycine, glutamic acid, proline, threonine, theanine, cysteine, cystine, alanine, valine, tyrosine, leucine, isoleucine, asparagine, serine, lysine, histidine, ornithine, methionine, carnitine, aminobutyric acid, glutamine, hydroxyproline, taurine, norvaline, glutathione, sarcosine, poly-L-aspartic acid, poly-L-lysine, poly-L-ornithine, poly-L-arginine, and the like). In a specific embodiment, the salt may be sodium chloride, potassium chloride, sodium sulfate, potassium citrate, magnesium sulfate, alum, magnesium chloride, sodium or potassium salt of phosphoric acid, sodium or potassium salt of carbonic acid, sodium alginate, sodium gluconate, potassium gluconate, guanidine HCl, glucosamine HCl, sodium glutamate, adenosine monophosphate, magnesium gluconate, potassium tartrate, sodium tartrate, and any combination thereof.

Examples of the seasoning include, but are not limited to, aspartic acid, arginine, glycine, glutamic acid, proline, threonine, theanine, cysteine, cystine, alanine, valine, tyrosine, leucine, isoleucine, asparagine, serine, lysine, histidine, ornithine, methionine, carnitine, aminobutyric acid, glutamine, hydroxyproline, taurine, norvaline, glutathione, sarcosine, poly-L-aspartic acid, poly-L-lysine, poly-L-ornithine, poly-L-arginine, caffeine, quinine, urea, bitter orange peel oil, naringin and bitter trees, inosine monophosphate, guanosine monophosphate, adenosine monophosphate, cytosine monophosphate, uracil monophosphate, inosine diphosphate, guanosine diphosphate, adenosine diphosphate, cytosine diphosphate, uracil diphosphate, inosine triphosphate, guanosine triphosphate, adenosine triphosphate, cytosine triphosphate, uracil triphosphate, tannic acid, alum, tannic acid, and polyphenol (for example, tea polyphenol).

Examples of the flavoring include, but are not limited to, menthol, citrus fruits, ginger, mango extract, cinnamon, coconut, viridiflorol, almond, vanillin, vanilla extract, grape skin extract, and grape seed extract.

Examples of the coloring agent include, but are not limited to, annato pigment, gardenia yellow pigment, Dunaliella carotene, carrot carotene, palm oil carotene, tomato pigment, lycopene, paprika pigment, carotenoid-based pigment, madder pigment, cochineal pigment, gromwell pigment, lac pigment, quinone-based pigment, red cabbage pigment, perilla pigment, anthocyanin pigment, tamarind pigment, safflower pigment, flavonoid-based pigment, chlorophyllin, chlorophyll, caramel, gardenia blue pigment, gardenia red pigment, Red No. 2, Red No. 3, Red No. 40, Red No. 102, Red No. 104, Red No. 105, Red No. 106, Yellow No. 4, Yellow No. 5, Blue No. 1, Blue No. 2, Green No. 3, β-carotene, and riboflavin.

Examples of the mineral include, but are not limited to, zinc, iron, copper, chromium, selenium, manganese, molybdenum, iodine, and phosphorus.

Examples of the vitamin include, but are not limited to, vitamin C (ascorbic acid), vitamin D (ergocalciferol, cholecalciferol, and the like), vitamin E (tocopherol, tocotrienol, and the like), vitamin A (retinol, β-carotene, α-carotene, β-cryptoxanthin), vitamin B1, vitamin B2, vitamin B3, vitamin B5, vitamin B6 (pyridoxal, pyridoxamine, pyridoxine, and the like), vitamin B7, vitamin B9, vitamin B12 (cyanocobalamin, methylcobalamin, hydroxocobalamin, and the like), and vitamin K (phyloquinone, menaquinone, and the like).

Examples of the antioxidant include, but are not limited to, ascorbic acid, catechin, polyphenols, rutin, neohesperidin, naringin, and neohesperidin dihydrochalcone.

Examples of preservative include, but are not limited to, sodium benzoate.

Examples of the foaming agent include, but are not limited to, sodium carbonate, sodium bicarbonate, potassium carbonate, potassium bicarbonate, and citric acid.

Examples of the auxiliary foaming agent include, but are not limited to, indigestible dextrin, polydextrose, galactomannan, guar bean fiber, pectin, glucomannan, sodium alginate, water-soluble corn fiber, soybean dietary fiber, and hydrolysates thereof.

Examples of the binder include, but are not limited to, hydroxypropyl cellulose and methyl cellulose.

Examples of the extender include, but are not limited to, the sugar components described in the present specification, maltodextrins, corn syrup solids, sucrose, fructose, glucose, invert sugars, sorbitol, xylose, ribulose, mannose, xylitol, mannitol, galactitol, erythritol, maltitol, lactitol, isomalt, maltose, tagatose, lactose, inulin, glycerol, propylene glycol, polyols, polydextrose, fructo-oligosaccharides, cellulose and cellulose derivatives, and sugar alcohols.

Examples of the thickener include, but are not limited to, chitosan, pectin, pectinic acid, polyuronic acid, polygalacturonic acid, gum arabic, carrageenan, polyarginine, polypropylene glycol, polyethylene glycol, poly(ethylene glycol methyl ether), polyaspartic acid, polyglutamic acid, polyethyleneimine, alginic acid, propylene glycol alginate, hexametaphosphate, and polyethylene glycol alginic acid, whey protein, rice protein, soybean protein, collagen (for example, gelatin), and partially hydrolyzed collagen.

Examples of the surfactant include, but are not limited to, polysorbates (for example, polysorbate 80, polysorbate 20, and polysorbate 60), sodium dodecylbenzene sulfonate, docusate or dioctyl sodium sulfosuccinate, sodium dodecyl sulfate, cetylpyridinium chloride (hexadecylpyridinium chloride), hexadecyltrimethylammonium bromide, sodium chlorate, carbamyl, choline chloride, sodium glycocholate, sodium taurodeoxycholate, laurylalginic acid, sodium stearoyl lactylate, sodium taurocholate, lecithin, sucrose oleate ester, sucrose stearate ester, sucrose palmitate ester, and sucrose laurate ester.

Examples of the anti-solidification agent include, but are not limited to, cream of tartar, calcium silicate, silicon dioxide, microcrystalline cellulose, and tricalcium phosphate.

Although each component has been described above as being classified based on function, it is not intended to prevent a component having a certain function from being selected based on another function. For example, it is readily understood by the skilled person that ascorbic acid may be used as an antioxidant or as an acidulant.

The rebaudioside composition or the composition of the present disclosure may be in any form, such as in the form of a solution, powder (dry powder), granules, tablet, paste, capsule, suspension, food form, or the like.

### (Taste Quality of Rebaudioside Composition)

In one embodiment, the rebaudioside composition of the present disclosure may exhibit a certain taste quality. The taste quality of the composition may be expressed by evaluation items of the taste quality or a combination thereof. For example, the evaluation items of the taste quality include overall sweetness, quickness to top sweetness, sweetness intensity, remaining sweetness, bitterness, remaining bitterness, top bitterness, astringency, remaining astringency, richness, roundness, and refreshing feeling. When the evaluation items of taste quality are combined, each evaluation item can be quantified and summed up for comprehensive evaluation. In such a case, a negative value may be assigned to an unfavorable evaluation item (it may be remaining sweetness, bitterness, remaining bitterness, top bitterness, astringency, remaining astringency, and the like, but types of unfavorable evaluation items may vary depending on desired taste quality). A particularly important evaluation item may be multiplied by a multiple coefficient (for example, 1.5 times, 2 times, 3 times). For example, a combination of evaluation items such as overall sweetness, quickness to top sweetness, bitterness, astringency, and refreshing feeling may be suitable for a sour beverage (carbonated beverage or the like) provided at a low temperature.

Based on the disclosure herein, the skilled person can determine the components (for example, rebaudioside A, rebaudioside D, and rebaudioside M) and the proportions thereof in the rebaudioside composition that achieves a desired taste quality.

In one embodiment, the rebaudioside composition of the present disclosure may have a desired sweetness sensation. The "sweetness sensation" refers to the time until sweetness is felt after ingestion. In one embodiment, the rebaudioside composition of the present disclosure may have a desired sweetness sensation. As illustrated in Fig. 1, in view of the sweetness sensation of each of rebaudioside A, rebaudioside D, and rebaudioside M, it is possible to obtain a new sweet composition that has no gap in the sweetness sensation by combining them. For example, since there is a gap between the sweetness sensation of rebaudioside A and rebaudioside M, when they are mixed, the sweetness sensation is felt as they are divided into two, which is not preferable. However, by further combining rebaudioside D, a taste curve can be formed as having sweetness of a single sweetness sensation.

In one embodiment, the rebaudioside composition of the present disclosure has a taste quality such that the sweetness sensation comes near the peak of bitterness and/or astringency, and thus the bitterness and/or astringency may be masked by the sweetness. In one embodiment, the taste quality to be masked (bitterness, astringency, and the like) is derived from rebaudioside A. In one embodiment, the taste quality to be masked (bitterness, astringency, and the like) is derived from the rebaudioside composition of the present disclosure or a food product to which the composition is added. For example, electrolytes comprised in sports drinks may result in unfavorable taste qualities, such as bitterness, scum taste, astringency, and harshness, and the rebaudioside composition or the composition of the present disclosure may mask these taste qualities. The sweetness sensation obtained by mixing rebaudioside A, rebaudioside D, and rebaudioside M may suitably mask the taste quality caused by the electrolyte.

In one embodiment, the rebaudioside composition of the present disclosure may have a desired shape of sweetness curve. The shape of sweetness curve can obtain a synergistic effect of sweetness that may be expressed by, for example, the range in which sweetness is felt in addition to the sweetness sensation. The synergistic effect of sweetness refers to an effect of making a person more strongly feel the sweetness intensity that exceeds 50 when the sweetness intensity at the sweetness peak is 100 during sweetness duration time. In one embodiment, the rebaudioside composition of the present disclosure may have a range in which sweetness is felt.

### (Food Product)

In one embodiment, the rebaudioside composition or the composition of the present disclosure may be added to a food product, and the present disclosure provides a food product containing the rebaudioside composition or the composition of the present disclosure. The rebaudioside composition or the composition of the present disclosure can be used in all food products where sweetener is used. The rebaudioside composition or the composition of the present disclosure can be used for, specifically, but not limited to, sports beverages, non-carbonated beverages, carbonated beverages, ginger ales, root beers, ciders, fruit-flavored soft drinks (for example, citrus flavored soft drinks, such as lemon lime flavored soft drinks and orange flavored soft drinks), powdered soft drinks, fruit juice derived from fruits and/or vegetables, fruit beverages, fruit juice beverages, fruit-flavored beverages, vegetable juice, mixed juice, energy drinks, coffee, cocoa, black tea, green tea, oolong tea, milk beverages, cafe au lait, milk tea, fruit milk beverages, yogurt drinks, lactic acid bacteria beverages, dairy products, bakery products, yogurt, jelly, jelly drinks, puddings, bavarian cream, blancmange, cakes, brownies, mousse, frozen foods, ice creams, ice milks, lactose ice creams, sherbet, confectioneries, rice cakes, snacks, candies, soft candies, sauces, edible gels, creams, pasta, jam, corn products, spices, grilled meat, tomato ketchups, processed agricultural products, processed livestock products, processed marine products, processed meat products, boil-in-the-bag meals, pickles, preserved foods, cereal products, frozen confectioneries, instant noodles, jams, chewing gums, Japanese confectioneries, health food products, chocolates, tabletop sweeteners, baked confectioneries, delicacies, water-kneaded food, yoghurt, liqueur, wine, sherbet, cereal foods, plant fiber-containing foods, dried fruits, sauces, soy sauce, miso pastes, vinegars, dressings, mayonnaise, ketchups, curry, soup, rice confectioneries, cubic rice crackers, breads, biscuits, crackers, pancake mixes, canned fruits, canned vegetables, vegetable juice, meat products, fish meat paste products, marine products, salty foods, pickled vegetables, complex seasonings, alcoholic beverages, seasonings, vinegar beverages, concentrated beverages, supplements, functional foods, protein foods, palatable foods, and the like. The rebaudioside composition or the composition of the present invention can also be used in cosmetics, pharmaceuticals, and the like.

In one embodiment, the rebaudioside composition or the composition of the present disclosure can be used in a food product containing a saccharide (for example, sugar or sucrose). Since the rebaudioside composition or the composition of the present disclosure can replace the saccharides in a food product, the calories of the food product can be reduced. Since saccharides are frequently used in food products, the amount of saccharides suitable for adding to each food product is well known. In one embodiment, the rebaudioside composition or the composition of the present disclosure is added to a saccharide-containing food product to replace the saccharides in an amount that does not alter the taste quality of the saccharide-containing food product. In one embodiment, the rebaudioside composition or the composition of the present disclosure is added in a weight that replaces about 10% or more, about 20% or more, about 30% or more, about 40% or more, about 50% or more, about 60% or more, about 70% or more, about 80% or more, about 90% or more, or 100% of the weight of the saccharide (for example, sugar or sucrose) in the food product. In one embodiment, as a results of replacing the saccharide (for example, sugar or sucrose) in a food product with the rebaudioside composition or the composition of the present disclosure, the rebaudioside composition or the composition of the present disclosure is added in a weight of about 0.01% to 1%, for example about 0.02% to 1%, about 0.05% to 1%, about 0.07% to 1%, about 0.1% to 1%, about 0.15% to 1%, about 0.2% to 1%, about 0.3% to 1%, about 0.5% to 1%, about 0.01% to 0.5%, about 0.02% to 0.5%, about 0.05% to 0.5%, about 0.07% to 0.5%, about 0.1% to 0.5%, about 0.15% to 0.5%, about 0.2% to 0.5%, about 0.3% to 1%, about 0.01% to 0.3%, about 0.02% to 0.3%, about 0.05% to 0.3%, about 0.07% to 0.3%, about 0.1% to 0.3%, about 0.15% to 0.3%, about 0.01% to 0.2%, about 0.02% to 0.2%, about 0.05% to 0.2%, about 0.07% to 0.2%, about 0.1% to 0.2%, about 0.01% to 0.15%, about 0.02% to 0.15%, about 0.05% to 0.15%, about 0.07% to 0.15%, about 0.01% to 0.1%, about 0.02% to 0.1%, or about 0.05% to 0.1% of the weight of the saccharide in the food product. In one embodiment, the rebaudioside composition or the composition of the present disclosure is added to a saccharide-free (sugarless) food product.

In one embodiment, the rebaudioside composition or the composition of the present disclosure is added to lactic acid bacteria beverages, fruit juice beverages, coffee, cupcakes, pastries, protein beverages, protein bars, chocolates, or sports drinks (for example, comprising a total of about 1 to 500 mg/mL, about 10 to 400 mg/mL, or about 50 to 300 mg/mL of the inorganic electrolyte). In this embodiment, the rebaudioside composition may have a ratio of rebaudioside A : the total content of rebaudioside D and rebaudioside M of about 3 : 1 to 1 : 2 (for example, about 3 : 1, about 2.5 : 1, about 2 : 1, about 1.5 : 1, about 1 : 1, about 1 : 1.5, or about 1 : 2), rebaudioside D of about 10 wt% or more (for example, about 10 to 30 wt%, about 12 wt% or more, about 14 wt% or more, about 16 wt% or more, about 18 wt% or more, about 20 wt% or more, about 22 wt% or more, about 24 wt% or more, about 26 wt% or more, or about 28 wt% or more), rebaudioside M of about 10 wt% or more (for example, about 10 to 30 wt%, about 12 wt% or more, about 14 wt% or more, about 16 wt% or more, about 18 wt% or more, about 20 wt% or more, about 22 wt% or more, about 24 wt% or more, about 26 wt% or more, or about 28 wt% or more), and a total steviol glycoside content of about 90 wt% or more (for example, about 91 wt% or more, about 92 wt% or more, about 93 wt% or more, about 94 wt% or more, about 95 wt% or more, about 96 wt% or more, about 97 wt% or more, about 98 wt% or more, or about 99 wt% or more). In one embodiment, this rebaudioside composition may have a weight ratio of rebaudioside D : rebaudioside M of about 3 : 1 to 1 : 1 (for example, about 3 : 1, about 2.8 : 1, about 2.6 : 1, about 2.4 : 1, about 2.2 : 1, about 2 : 1, about 1.8 : 1, about 1.6 : 1, about 1.5 : 1, about 1.4 : 1, about 1.2 : 1, or about 1 : 1).

In one embodiment, the rebaudioside composition or the composition of the present disclosure is added to a food product in which sweetness is preferably sustained (for example, chewing gums, sugarless candies, and gummy candies). In this embodiment, the rebaudioside composition may have a ratio of rebaudioside A : the total content of rebaudioside D and rebaudioside M of about 1 : 1 to 1 : 3 (for example, about 1 : 1.2, about 1 : 1.4, about 1 : 1.6, about 1 : 1.8, about 1 : 2, about 1 : 2.2, about 1 : 2.4, about 1 : 2.6, about 1 : 2.8, or about 1 : 3). In one embodiment, this rebaudioside composition may have a weight ratio of rebaudioside D : rebaudioside M of about 3 : 1 to 1 : 1 (for example, about 3 : 1, about 2.8 : 1, about 2.6 : 1, about 2.4 : 1, about 2.2 : 1, about 2 : 1, about 1.8 : 1, about 1.6 : 1, about 1.5 : 1, about 1.4 : 1, about 1.2 : 1, or about 1 : 1).

In one embodiment, the food product of the present disclosure that is a beverage may have any pH, for example, may have a pH of about 2.0 to 9.0, about 2.5 to 9.0, about 3.0 to 9.0, about 3.5 to 9.0, about 4.0 to 9.0, about 3.0 to 8.0, about 3.5 to 8.0, about 4.0 to 8.0, about 3.0 to 7.0, about 3.5 to 7.0, about 4.0 to 7.0, about 3.0 to 6.5, about 3.5 to 6.5, about 3.0 to 6.0, about 3.5 to 6.0, about 3.0 to 5.5, about 3.5 to 5.5, about 3.0 to 5.0, about 3.5 to 5.0, about 1.5 to 4.5, about 3.0 to 4.5, or about 3.5 to 4.5. The liquid medium for the beverage may be water, such as tap water, carbonated water, or mineral water.

The amount of the rebaudioside composition or the composition of the present disclosure added to the food product of the present disclosure is not particularly limited, but it may be 0.0001 to 2.0 wt%, preferably 0.005 to 0.3 wt%, and further preferably 0.01 to 0.1 wt%.

### (Preparation Method)

In one aspect, the present disclosure provides a method of manufacturing the rebaudioside composition, the composition, or the food product of the present disclosure. In one embodiment, the present disclosure provides a method of manufacturing the rebaudioside composition of the present disclosure comprising mixing steviol glycosides. In one embodiment, the present disclosure provides a method of manufacturing a food product comprising adding the rebaudioside composition or the composition of the present disclosure to a food product.

The steviol glycoside (for example, rebaudioside A, rebaudioside D, and rebaudioside M) may be obtained by any method, and it may be obtained, for example, as an extract of stevia. Specifically, the steviol glycoside may be obtained from an extract obtained by selecting a stevia variety containing these sweetening components, extracting stevia dried leaves with water or a hydrophilic solvent, subjecting to concentration by a known purification method after bleaching, and drying, or may be obtained after crystallizing the extract with ethanol, methanol, or the like to remove unnecessary components (stevioside and the like) together with impurities, further concentrating, and drying.

Each of the steviol glycosides may be isolated, or a plurality of steviol glycosides (for example, rebaudioside D and rebaudioside M) may be obtained in a mixed state as an extract of stevia. From the economic viewpoint, such as isolation cost and isolation efficiency of each component, it may be preferable to obtain a plurality of components in a mixed state. In one embodiment, the steviol glycoside may be obtained by recrystallizing an extract of stevia with a hydrophilic alcohol. As the hydrophilic alcohol, for example, methanol or ethanol can be used.

### EXAMPLES

Hereinafter, the present invention will be described in more detail with reference to Examples, but the present invention is not limited to these Examples.

The taste qualities of a combination of rebaudioside A, rebaudioside D, and rebaudioside M at various blending ratios were evaluated.

### Purification of Steviol Glycoside

Dried leaves of Stevia Rebaudiana Bertoni (Morita variety) were extracted with water, and purification using an adsorption resin or the like and purification through crystallization were repeated from the extract, followed by drying, to prepare purified products, each containing rebaudioside A, rebaudioside D, and rebaudioside M as steviol glycosides with a purity of 95% or more.

A 2 : 1 mixture of rebaudioside D and rebaudioside M was prepared. The mixture was checked through HPLC analysis, and it was confirmed that there was no problem in the ratio.

Next, the mixture of rebaudioside D and rebaudioside M was mixed with rebaudioside A in a certain proportion.

The mixture of rebaudioside A, rebaudioside D, and rebaudioside M was dissolved in water at a concentration of 1000 ppm (auxiliary 500 ppm), and sensory evaluation was performed.

The sensory evaluation was performed by eight panelists who practiced the sensory test of steviol glycosides. The items of overall sweetness, quickness to top sweetness, sweetness intensity, remaining sweetness, bitterness, remaining bitterness, astringency, remaining astringency, and refreshing feeling were each scored by 0 to 6. Purified rebaudioside A and purified rebaudioside M were used as references for 1 point and 5 points, respectively. The evaluation policy of each evaluation item is shown below.

**[Table 1]**

| | |
|---|---|
| Overall sweetness | Weak 0 to 6 Strong |
| Quickness to top sweetness | Slow 0 to 6 Quick |
| Sweetness intensity | Weak 0 to 6 Strong |
| Remaining sweetness | Short 0 to 6 Long |
| Bitterness | Weak 0 to 6 Strong |
| Remaining bitterness | Short 0 to 6 Long |
| Astringency | Weak 0 to 6 Strong |
| Remaining astringency | Short 0 to 6 Long |
| Refreshing feeling | Weak 0 to 6 Strong |

Among these evaluation indexes, negative values were assigned to remaining sweetness, bitterness, remaining bitterness, astringency, and remaining astringency. The evaluation items and their total values are shown in the table below.

**[Table 2]**

| Sample No. | 1 | 2 | 3 | 4 | 5 | 6 | 7 | 8 | 9 | 10 | 11 |
|---|---|---|---|---|---|---|---|---|---|---|---|
| RA | 70 | 65 | 60 | 55 | 50 | 45 | 40 | 35 | 30 | 25 | 20 |
| RD:RM=2:1 | 30 | 35 | 40 | 45 | 50 | 55 | 60 | 65 | 70 | 75 | 80 |
| Overall sweetn ess | 2.44 | 2.63 | 2.88 | 2.88 | 3.25 | 3.25 | 3.25 | 3.38 | 3.44 | 3.69 | 3.69 |
| Quickness to t op sweetness | 4.06 | 3.94 | 3.69 | 3.38 | 3.44 | 3.31 | 3.13 | 2.88 | 3 | 2.63 | 2.75 |
| Sweetness int ensity | 3.69 | 3.81 | 3.75 | 3.31 | 3.38 | 3.13 | 2.88 | 2.94 | 2.81 | 2.69 | 2.63 |
| Remaining sw eetness | -2.31 | -2.56 | -2.69 | -2.75 | -2.75 | -2.94 | -2.94 | -3.19 | -3 | -3.44 | -3.56 |
| Bitterness | -3.5 | -3.38 | -2.81 | -2.75 | -2.69 | -2.56 | -2.56 | -2.44 | -2.31 | -2.19 | -1.94 |
| Remaining bitt erness | -3.38 | -3.25 | -2.69 | -2.63 | -2.56 | -2.56 | -2.38 | -2.38 | -2.31 | -2.13 | -2 |
| Astringency | -3.69 | -3.31 | -3.06 | -2.81 | -2.69 | -2.63 | -2.56 | -2.5 | -2.38 | -2.25 | -2.13 |
| Remaining ast ringency | -3.81 | -3.44 | -3.13 | -3 | -2.63 | -2.88 | -2.63 | -2.5 | -2.38 | -2.25 | -2.31 |
| Refreshing fee ling | 3.56 | 3.38 | 3.25 | 3.56 | 3.06 | 3.13 | 3.25 | 2.81 | 3 | 2.69 | 2.56 |
| Total evaluatio n | -2.94 | -2.19 | -0.81 | -0.81 | -0.19 | -0.75 | -0.56 | -1 | -0.13 | -0.56 | -0.31 |

When the proportion of rebaudioside A is in the range of more than 20% and less than 65% (samples 3 to 9), the total evaluation is relatively high, and about 3 or more or about -3 or less is achieved in all the evaluation items. Thus, it is considered that the balance of taste qualities is particularly excellent. As the proportion of rebaudioside A decreased, the evaluation of the pre-taste decreased, while remaining bitterness and remaining astringency decreased. Remaining bitterness and remaining astringency decreased because of the masking effect of rebaudioside D/rebaudioside M by which sweetness sensation is slow. It is considered that the subsequent sweetness intensity was able to be enhanced while maintaining the quickness of sweetness sensation found in rebaudioside A, and the shape of taste was changed as compared with rebaudioside A alone. Other ranges may also be preferred depending on the desired taste quality.

The preferred taste quality and the unfavorable taste quality may vary depending on the food product. For example, "remaining sweetness" evaluated as an unfavorable taste quality in the above evaluation can be said to be a preferable property in food products such as chewing gums. Thus, the formulations of Sample Nos. 8 and 9 in Table 2 may be suitable for food products, such as chewing gums, for which sustained sweetness is preferable.

Further study was conducted focusing on the formulation of Sample No. 3 (RA : RD + RM = 60 : 40, RD : RM = 2 : 1) in Table 2 above. As a result of testing a plurality of formulations satisfying the conditions of RA : RD + RM = 60 : 40, RD content of 20% or more, RM content of 10% or more, and the total content of steviol glycosides of 95% or more, equivalent sweetness evaluation was obtained within the range of RD : RM = 1.5 : 1 to RD : RM = 2.2 : 1.

It was confirmed that such a formulation can be suitably applied to products using a large amount of sugar, such as lactic acid bacteria beverages, fruit juice beverages, coffee, cupcakes, pastries, protein beverages, protein bars, and chocolates. For example, when 50% of the weight of sugar to be used in these products was replaced with the above formulated steviol sweetener (approximately 300 to 400 times the sweetness intensity of sugar) in an amount of an equivalent sweetness intensity, an equivalent taste quality was obtained. Thus, it is possible to provide a low-calorie food product with reduced sugar while maintaining the taste quality of the food product with sugar.

Further, the steviol sweetener of the above formulation was also successfully applied to sports drinks. A sports drink contains an inorganic electrolyte, an inorganic electrolyte, and an organic electrolyte to replenish cations such as Na, K, Mg, and Ca and anions such as Cl⁻ and phosphate ions, which are biological components flowing out with sweating. When a beverage is blended with an appropriate amount of an electrolyte (in particular, an inorganic electrolyte) for replenishment, the beverage generally has unfavorable taste qualities such as bitterness, scum taste, astringency, and harshness. Generally, in sports drinks, such unfavorable taste qualities are masked by adding sugar.

Thus, the inventors of the present invention prepared a sports drink containing sugar as a sweetener (control sports drink) and a sports drink containing a steviol sweetener of the above formulation instead of a part of sugar, and tested their taste qualities. As a result, it was confirmed that the sports drink in which 50% of the weight of sugar was replaced with the steviol sweetener has bitterness, scum taste, astringency, and harshness at the level as low as the control sports drink. Unexpectedly, the steviol sweetener showed an effect of masking the unfavorable taste qualities caused by the electrolyte similar to sugar, and a refreshing taste quality was confirmed. The saccharides to be added to a sports drink provide the majority of the osmotic pressure of the sports drink. By replacing the saccharides of a sports drink with a steviol sweetener, which is a high-intensity sweetener, the osmotic pressure of the sports drink can be reduced (hypotonic beverage), and there is also an effect that it becomes easier to drink.

### INDUSTRIAL APPLICABILITY

Since the rebaudioside composition or the composition of the present invention may add a certain taste quality, it may contribute to new product development in the food product field or the like.

## Claims

1. A rebaudioside composition comprising rebaudioside A, rebaudioside D, and rebaudioside M.

2. The rebaudioside composition according to claim 1, comprising the rebaudioside A in an amount of less than about 65 wt%.

3. The rebaudioside composition according to claim 1, comprising the rebaudioside A in an amount of about 35 to 65 wt%.

4. The rebaudioside composition according to claim 1, comprising the rebaudioside A in an amount of more than about 20 wt% and less than about 65 wt%.

5. The rebaudioside composition according to claim 2, wherein the rebaudioside D is present in an amount larger than an amount of the rebaudioside M.

6. The rebaudioside composition according to claim 2, wherein the rebaudioside M is present in an amount larger than an amount of the rebaudioside D.

7. The rebaudioside composition according to claim 2, comprising the rebaudioside D and the rebaudioside M in a ratio of about 1.5 : 1 to 5 : 1.

8. The rebaudioside composition according to claim 2, comprising the rebaudioside D and the rebaudioside M in a ratio of about 1.5 : 1 to 2.5 : 1.

9. The rebaudioside composition according to claim 2, comprising a total content of the rebaudioside D and the rebaudioside M of about 5 to 65 wt%.

10. The rebaudioside composition according to claim 2, comprising a total content of the rebaudioside D and the rebaudioside M of about 5 to 40 wt%.

11. The rebaudioside composition according to claim 1, comprising the rebaudioside A in an amount of about 95 wt% or more.

12. The rebaudioside composition according to any one of claims 1 to 10, further comprising rebaudioside O, for example, rebaudioside O in an amount of about 1 to 10 wt%.

13. The rebaudioside composition according to any one of claims 1 to 10, further comprising rebaudioside N, for example, rebaudioside N in an amount of about 1 to 10 wt%.

14. A composition comprising the rebaudioside composition according to claim 1 and an additional component selected from the group consisting of acidulants, sweeteners, salts, seasonings, flavorings, coloring agents, minerals, vitamins, antioxidants, preservatives, foaming agents, auxiliary foaming agents, alcohols, binders, extenders, thickeners, surfactants, anti-solidification agents, fruit juice, and vegetable juice.

15. The rebaudioside composition according to claim 1 or the composition according to claim 14 for adding to a food product.

16. A food product comprising the rebaudioside composition according to claim 1 or the composition according to claim 14.

17. The rebaudioside composition or the composition according to claim 15 or the food product according to claim 16, wherein the food product is selected from the group consisting of sports beverages, non-carbonated beverages, carbonated beverages, ginger ales, root beers, ciders, fruit-flavored soft drinks (for example, citrus flavored soft drinks, such as lemon lime flavored soft drinks and orange flavored soft drinks), powdered soft drinks, fruit juice derived from fruits and/or vegetables, fruit beverages, fruit juice beverages, fruit-flavored beverages, vegetable juice, mixed juice, energy drinks, coffee, cocoa, black tea, green tea, oolong tea, milk beverages, cafe au lait, milk tea, fruit milk beverages, yogurt drinks, lactic acid bacteria beverages, dairy products, bakery products, yogurt, jelly, jelly drinks, puddings, bavarian cream, blancmange, cakes, brownies, mousse, frozen foods, ice creams, ice milks, lactose ice creams, sherbet, confectioneries, rice cakes, snacks, candies, soft candies, sauces, edible gels, creams, pasta, jam, corn products, spices, grilled meat, tomato ketchups, processed agricultural products, processed livestock products, processed marine products, processed meat products, boil-in-the-bag meals, pickles, preserved foods, cereal products, frozen confectioneries, instant noodles, jams, chewing gums, Japanese confectioneries, health food products, chocolates, tabletop sweeteners, baked confectioneries, delicacies, water-kneaded food, yoghurt, liqueur, wine, sherbet, cereal foods, plant fiber-containing foods, dried fruits, sauces, soy sauce, miso pastes, vinegars, dressings, mayonnaise, ketchups, curry, soup, rice confectioneries, cubic rice crackers, breads, biscuits, crackers, pancake mixes, canned fruits, canned vegetables, vegetable juice, meat products, fish meat paste products, marine products, salty foods, pickled vegetables, complex seasonings, alcoholic beverages, seasonings, vinegar beverages, concentrated beverages, supplements, functional foods, protein foods, and palatable foods.

18. The rebaudioside composition or the composition according to claim 15 or the food product according to claim 16, wherein the food product is selected from the group consisting of lactic acid bacteria beverages, fruit juice beverages, coffee, cupcakes, pastries, protein beverages, protein bars, chocolates, and sports drinks.

19. A method of manufacturing a food product, the method comprising adding the rebaudioside composition or the composition according to claim 15 to a food product.
